# EUROPEAN PATENT SPECIFICATION

(11) **EP 3 583 880 B1**
(45) Date of publication and mention of the grant of the patent: **07.06.2023**
(21) Application number: 19000147.9
(22) Date of filing: 26.03.2019
(51) Int. Cl.: A47J 37/10

(54) **DOUBLE PAN**
DOPPELPFANNE
DOUBLE BAC

(30) Priority: 19.06.2018 ES 201830941 U
(43) Date of publication of application: 25.12.2019
(73) Proprietor: Isogona, S.L., 43800 Valls (Tarragona) (ES)
(72) Inventor: Gavaldà Rius, Anton, 43800 Valls (Tarragona) (ES)
(74) Representative: Maldonado Jordan, Julia

(56) References cited:
- WO-A1-2013/065145
- KR-B1- 101 118 085
- US-A- 2 061 610
- US-A1- 2002 011 154
- US-A1- 2013 334 207

## Description

### Object of the invention.

The object of the invention is a double pan comprising: a first pan body and a second pan body, that are identical and independent, each provided with: a cavity provided with a mouth and delimited by a bottom and a side wall; a grip handle; and the corresponding portion of a hinge for coupling the first body and the second body, with the possibility of rotation between an open and separated position, and a closed and flipping position wherein the mouths and the handles of both bodies are arranged facing each other.

### Field of application of the invention.

This invention is applicable in the sector dedicated to manufacturing kitchen utensils and, in particular, pans for preparing Spanish omelettes or other foods which need to be flipped during the preparation thereof.

### Background of the invention.

Currently, double pans, or double-body pans, are known which are made up of a first body and a second body, practically identical, and which have corresponding handles for the gripping thereof and a hinge which enables the coupling and decoupling to be performed and, in the coupling position, the relative rotation of both bodies between an open position and a closed position of the pan.

This type of pan is described, for example, in utility model ES1138507U relating to a multipurpose double-body pan, or in utility model ES1077192U relating to a multipurpose double pan.

These double pans are mainly used for preparing Spanish omelettes, since in the closed position they enable the flipping of the pan passing the Spanish omelette from one body to the other.

The double pans existing in the market have some drawbacks when used which we will refer to below.

The bodies of these double pans are made of stainless steel for which reason they have a relatively high weight which, together with the weight of the Spanish omelette or food to be prepared, makes the flipping operation considerably more difficult.

Another drawback is that the bodies of these double pans do not have suitable means for guaranteeing the airtight closure of the cavity delimited by the same in the coupling position, for which reason when the flipping is performed it produces a spill of the oil or liquids released by the food being prepared.

An additional drawback is that these double pans do not have specific means for preventing the slipping or relative movement of both bodies with respect to the closing plane thereof, it being the user that must apply enough pressure with their hands on the handles to hold them facing each other, and without the possibility of relative movement in the lateral direction.

US 2013/334207 A1 relates to a cooking pan having the features of the preamble of claim 1.

Thus, the technical problem posed is the development of a double pan, of the type mentioned previously, but which has characteristics intended to solve the cited drawbacks.

The invention is defined by the features of claim 1. A further embodiment is defined in dependent claim 2.

The handles of the bodies comprise magnetic means which tend to hold them joined in the closed position of the double pan, said magnets reducing the force the user must apply on the handles in order to hold the double pan closed.

The mouths of the bodies have at least one elastic seal segment and a protruding rib segment, distributed in a suitable manner so that in the closed position of the double pan each rib segment of one body presses on an elastic seal segment of the opposite body, establishing the airtight closing of both bodies and preventing the spilling of oil or liquids during the flipping of the double pan.

These and other characteristics of the invention included in the attached claims will be better understood in light of the exemplary embodiment shown in the figures described below.

### Description of the drawings.

As a complement to the description provided herein, and for the purpose of helping to make the characteristics of the invention more readily understandable, this specification is accompanied by a set of drawings which, by way of illustration and not limitation, represent the following:
- Figure 1 shows a perspective view of an exemplary embodiment of the double pan, according to the invention, in a closed position.
- Figure 2 shows an upper perspective view of the double pan of the previous figure in the open position and with the two bodies separated.
- Figure 3 shows an elevation view of the double pan in the closed position of figure 1, in a partial cross section in order to enable the observation of the complementary appendages and recesses in the closed position and the arrangement of the magnetic means of the handle facing each other.
- Figure 4 shows a profile view of the double pan in the closed position and from the side corresponding to the handle, the pan having been represented in a partial cross section. This figure includes an enlarged detail of the cross section wherein a rib section of one of the bodies can be seen pressing on an elastic seal section of the other body.

### Preferred embodiment of the invention.

In the exemplary embodiment shown in the attached figures, the double pan comprises a first pan body (101) and a second pan body (201), that are identical and independent, provided with corresponding gripping handles (102, 202).

The first body (101) and the second body (201) are each provided with: a cavity provided with a mouth (105, 205) and delimited by a bottom (103, 203) and a side wall (104, 204).

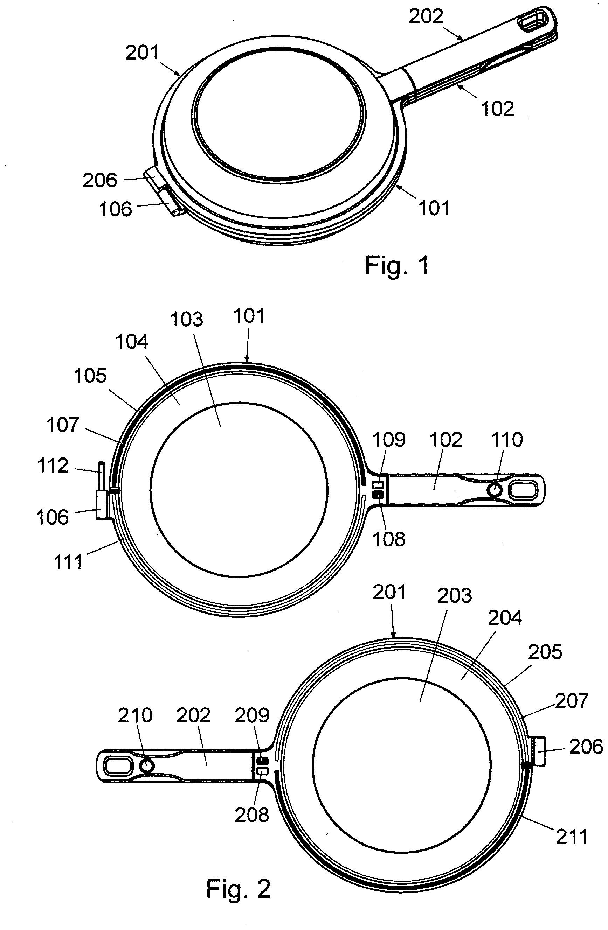

Said bodies (101, 201) have, in an area diametrically opposite from the handle, corresponding horizontal tubular appendages (106, 206) which make up, together with a rotation shaft (112), a hinge for eventual coupling and rotation of the two bodies (101, 201) of the pan between an open and released position, shown in figure 2, and a closed position, shown in figures 1, 3 and 4, wherein the two bodies (101, 201) are arranged facing each other with the mouths thereof.

Both the first body (101) and the second body (201) are made up in the entirety thereof of aluminium and have in the mouths (105, 205) thereof seals (107, 207) made of elastic material which, in this case, occupy approximately half the circumference of the mouth; said mouths (105, 205) having in the other half a protruding rib (111, 211), defined in the material itself of the bodies (101, 201) and which are responsible for pressing on the elastic seal (207) of the opposite body (201, 101) when the closing of the double pan is performed, establishing an airtight seal of both bodies (101, 201).

This characteristic guarantees that during the flipping of the double pan, the oil or liquids contained therein are not spilled through the closing area of the double pan.

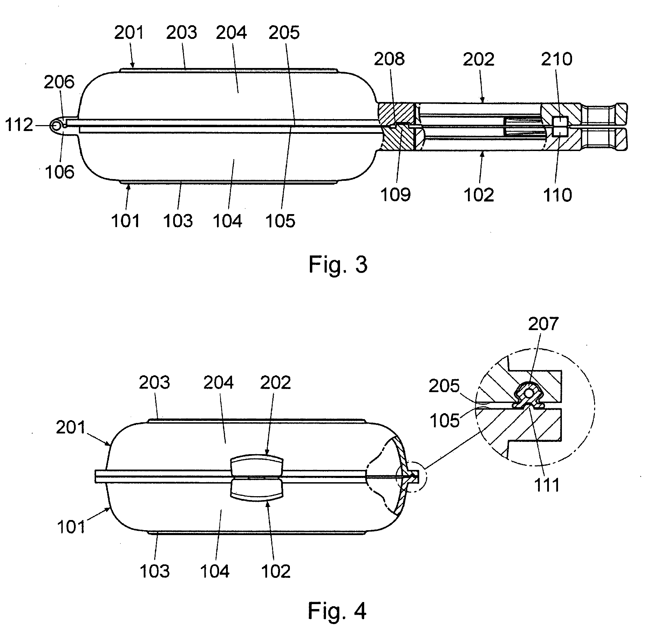

As seen in figures 2 and 3, the bodies (101, 201) comprise in an initial area of the handle complementary appendages (108, 208) and recesses (109, 209), which in the closed position of the double pan are coupled to those of the opposite body preventing the relative movement of the respective bodies (101, 201) in the radial or lateral direction.

In the example shown, the handles (102, 202) also comprise magnetic means (110, 210) which tend to hold them joined in the closed position of the double pan.

Having sufficiently described the nature of the invention, in addition to an example of preferred embodiment, it is hereby stated for the relevant purposes that the materials, shape, size and layout of the described elements may be modified, provided that they are encompassed by the appended claims.

## Claims

1. A double pan; comprising: a first pan body (101) and a second pan body (201), that are identical and independent; each provided with:
a cavity provided with a mouth (105, 205) delimited by a bottom (103, 203) and a side wall (104, 204); and
a gripping handle (102, 202) and a corresponding portion of a hinge for coupling the first (101) and the second bodies (201) with the possibility of rotation between an open and separated position, and a closed and flipping position wherein the mouths (105, 205) and the handles (102, 202) of both bodies are arranged facing each other; and wherein the first and the second bodies (101, 201) have in the mouths (105, 205) thereof seals (107, 207) made of elastic material, which in the closed position of the double pan are pressed on by the opposite body (201, 101) and establish a closure which prevents the spilling of liquids during the flipping of the pan;
wherein
the first and second bodies (101, 201) are made of aluminium;
the handles (102, 202) or the bodies (101, 201) comprise complementary appendages (108, 208) and recesses (109, 209) which, in the closed position of the double pan are coupled to those of the opposite handle or body, and prevent the relative movement of the respective bodies (101, 201) in a radial or lateral direction;
the handles (102, 202) comprise magnetic means (110, 210) which tend to keep them joined in the closed position of the double pan; **characterized in that**
both the first body (101) and the second body (201) have in the mouths (105, 205) thereof seals (107, 207) made of elastic material which occupy approximately half the circumference of the mouth; said mouths (105, 205) having in the other half a protruding rib (111, 211), defined in the material itself of the bodies (101, 201) and which are responsible for pressing on the elastic seal (207) of the opposite body (201, 101) when the closing of the double pan is performed, establishing an airtight seal of both bodies (101, 201).

2. The double pan, according to claim 1, **characterised in that** the bodies (101, 201) comprise, in opposite areas from the handles, corresponding horizontal tubular appendages (106, 206), which make up together with a rotation shaft (112), the hinge for coupling and rotating the bodies (101, 201) of the pan.

## Patentansprüche

1. Doppelpfanne; umfassend: einen ersten Pfannenkörper (101) und einen zweiten Pfannenkörper (201), die identisch und unabhängig sind; jeweils versehen mit:
einem Hohlraum, der mit einer Mündung (105, 205) versehen ist, die durch einen Boden (103, 203) und eine Seitenwand (104, 204) begrenzt ist; und
einem Haltegriff (102, 202) und einem entsprechenden Teil eines Scharniers zum Koppeln des ersten (101) und des zweiten Körpers (201) mit Drehmöglichkeit zwischen einer offenen und gelösten Stellung und einer geschlossenen und umdrehenden Stellung,
in der die Mündungen (105, 205) und die Griffe (102, 202) beider Körper einander zugewandt sind; und wobei der erste und der zweite Körper (101, 201) in ihren Mündungen (105, 205) Dichtungen (107, 207) aus elastischem Material aufweisen, die in der geschlossenen Stellung der Doppelpfanne durch den gegenüberliegenden Körper (201, 101) angedrückt werden und einen Verschluss bilden, der das Auslaufen von Flüssigkeiten beim Umdrehen der Pfanne verhindert;
wobei
der erste und der zweite Körper (101, 201) aus Aluminium bestehen;
die Griffe (102, 202) oder die Körper (101, 201) zusätzliche Fortsätze (108, 208) und Aussparungen (109, 209) umfassen, die in der geschlossenen Stellung der Doppelpfanne mit denjenigen des gegenüberliegenden Griffs oder Körpers gekoppelt sind und die Relativbewegung der jeweiligen Körper (101, 201) in einer radialen oder seitlichen Richtung verhindern;
die Griffe (102, 202) magnetische Mittel (110, 210) umfassen, die dazu neigen, diese in der geschlossenen Stellung der Doppelpfanne zusammenzuhalten; **dadurch gekennzeichnet, dass**
sowohl der erste Körper (101) als auch der zweite Körper (201) in ihren Mündungen (105, 205) Dichtungen (107, 207) aus elastischem Material aufweisen, die ungefähr die Hälfte des Umfangs der Mündung einnehmen; wobei die Mündungen (105, 205) in der anderen Hälfte eine vorstehende Rippe (111, 211) aufweisen, die in dem Material der Körper (101, 201) selbst definiert ist und dafür verantwortlich ist, die elastische Dichtung (207) des gegenüberliegenden Körpers (201, 101) anzudrücken, beim Schließen der Doppelpfanne, wodurch eine luftdichte Abdichtung der beiden Körper (101, 201) hergestellt wird.

2. Doppelpfanne nach Anspruch 1, **dadurch gekennzeichnet, dass** die Körper (101, 201) in den den Griffen gegenüberliegenden Bereichen entsprechende horizontale röhrenförmige Fortsätze (106, 206) umfassen, die zusammen mit einer Drehwelle (112) das Scharnier zum Koppeln und Drehen der Körper (101, 201) der Pfanne bilden.

## Revendications

1. Poêle double ; comprenant : un premier corps de poêle (101) et un second corps de poêle (201), qui sont identiques et indépendants ; munis chacun :
d'une cavité munie d'une embouchure (105, 205) délimitée par un fond (103, 203) et une paroi latérale (104, 204) ; et
d'un manche de préhension (102, 202) et d'une partie correspondante d'une charnière pour coupler les premier (101) et second corps (201) avec possibilité de rotation entre une position ouverte et de séparation, et une position fermée et de retournement
dans laquelle les embouchures (105, 205) et les manches (102, 202) des deux corps sont agencés se faisant face ; et dans laquelle les premier et second corps (101, 201) ont dans leurs embouchures (105, 205) des joints (107, 207) en matériau élastique, qui, dans la position fermée du poêle double, sont pressés par le corps opposé (201, 101) et établissent une fermeture qui empêche le déversement de liquides lors du retournement de la poêle ;
dans laquelle
les premier et second corps (101, 201) sont en aluminium ;
les manches (102, 202) ou les corps (101, 201) comprennent des appendices complémentaires (108, 208) et des évidements (109, 209) qui, dans la position fermée de la poêle double, sont couplés à ceux du manche ou du corps opposé, et empêchent le déplacement relatif des corps respectifs (101, 201) dans une direction radiale ou latérale ;
les manches (102, 202) comprennent des moyens magnétiques (110, 210) qui tendent à les maintenir joints dans la position fermée de la poêle double ; **caractérisée en ce que**
le premier corps (101) et le deuxième corps (201) ont tous deux dans leurs embouchures (105, 205) des joints (107, 207) en matériau élastique qui occupent approximativement la moitié de la circonférence de l'embouchure ; lesdites embouchures (105, 205) ayant dans l'autre moitié une nervure saillante (111, 211), définie dans le matériau même des corps (101, 201) et qui sont responsables d'exercer de la pression sur le joint élastique (207) du corps opposé (201, 101) lorsque la fermeture de la poêle double est effectuée, en établissant un joint étanche à l'air des deux corps (101, 201).

2. Poêle double, selon la revendication 1, **caractérisée en ce que** les corps (101, 201) comprennent, dans des zones opposées aux manches, des appendices tubulaires horizontaux (106, 206) correspondants, qui constituent conjointement, avec un arbre de rotation (112), la charnière pour coupler et faire tourner les corps (101, 201) de la poêle.
